# EUROPEAN PATENT APPLICATION

(11) **EP 2 448 140 A2**
(43) Date of publication of application: **02.05.2012**
(21) Application number: 10792349.2
(22) Date of filing: 24.06.2010
(51) Int. Cl.: H04B 7/04

(54) **METHOD FOR SELECTING PRECODER IN WIRELESS COMMUNICATION SYSTEM AND APPARATUS USING THE SAME, FEEDBACK METHOD OF CHANNEL INFORMATION OF TERMINAL, AND METHOD FOR RECEIVING CHANNEL INFORMATION OF BASE STATION**

(30) Priority: 25.06.2009 US 220353 P; 12.01.2010 KR 20100002603
(71) Applicant: Pantech Co., Ltd, Mapo-gu, Seoul 121-270 (KR)
(72) Inventor: PARK, Kyoungmin, Seoul, 121-270 (KR); SUH, Sungjin, Seoul 121-270 (KR); LI, Jianjun, Seoul 121-270 (KR)
(74) Representative: Herzog, Markus
(86) International application number: PCT/KR2010/004122
(87) International publication number: WO 2010/151067

(57) **Abstract**

Disclosed is related to a wireless communication system, and is a method and an apparatus for selecting a UE and a precoder based on a measurement during a determined period after receiving information extracted by using channel state information from each UE in a MU-MIMO communication system, and a switching apparatus and method between modes using the same. Accordingly, the BS performs a long term measurement based precoding by using only the same feedback information (for example, PMI) as that of a SU-MIMO mode, so that a set of UEs to be supported by a MIMO and precoders for each UE, which prevent or minimize interference between UEs, may be determined without an increase of a feedback overhead.

## Description

### Technical Field

The present invention relates to a wireless communication system, and more particularly to a method and an apparatus for selecting a precoder of a User Equipment (UE) in a Multiple User Multi-Input Multi-Output (MU-MIMO) communication system.

Specifically, the present invention relates to a technology for performing a long term measurement based precoding after receiving information (for example, a Precoding Matrix Index, hereinafter, referred to as a "PMI") extracted by using channel state information from each user equipment (hereinafter, referred to as a "terminal" or "UE"), a technology for selecting a UE of MU-MIMO using the same, and a method and an apparatus for performing dynamic switching between a Single User-MIMO (SU-MIMO) and a MU-MIMO using the same.

### Background Art

In general, with the development of communication systems, consumers such as enterprises and individuals use highly various wireless terminals.

In mobile communication systems such as current 3GPP, LTE (Long Term Evolution), and LTE-A (LTE Advanced), it is required to develop a technology, which can transmit high capacity data, equivalent to a wired communication network as a high speed and capacity communication system, which can transmit and receive various data such as image and radio data, beyond services mainly for voice. Further, it is necessary for such a technology to have a proper error detecting method, which can minimize an information loss and increase a system efficiency thereby improving a system capability.

Meanwhile, a communication system using MIMO (multiple-Input Multiple-Output) antennas is used in both transmitting and receiving terminals, and the communication system has a structure in which Single UE (SU) or Multiple UEs (MU) receive or transmit a signal from or to one base station having a plurality of antennas.

Meanwhile, in a communication type such as a 3GPP, a process of grasping a channel state by using a plurality of reference signals and feeding back the channel state to another device is required.

That is, when one UE is allocated a plurality of downlink physical channels, the UE may feedback channel state information for each physical channel to a base station to adaptively optimize a system. For the optimization, a Channel Status Index-Reference Signal (CSI-RS), a Channel Quality Indicator (CQI) signal, and a Precoding Matrix Index (PMI) signal may be used. A base station uses the channel state related information to schedule a channel of a corresponding UE.

Meanwhile, information on a propagation channel through which a signal passes when information is transferred to each UE or user is needed under an SU-MIMO system, while information on a correlation between propagation channels of users or a covariance is needed for a MU-MIMO support in addition to the information on the propagation channel through which the signal passes when information is transferred to each UE or user.

In a SU-MIMO system, each user or UE measures information on a propagation channel, through which a signal which is transmitted to the user or UE is propagated, and feeds back a PMI to a base station as information on a precoding method suitable for the measured channel. In such a SU-MIMO, each UE is allowed to select an optimal precoder for the UE so that the process may be implemented through a low feedback overhead.

However, in a MU-MIMO, since each UE cannot grasp the correlation between the UE and another UE, each UE transmits information on the correlation between the UE and another UE, for example, a covariance matrix, as well as a PMI for a propagation channel of the UE to a base station device or an eNB, and then the base station device or the eNB grasps the correlation between channels of UEs based on the transmitted information.

However, the information on the correlation with another channel, such as the covariance matrix, has a large size of data in comparison with a PMI. Accordingly, the MU-MIMO has a disadvantage of generating a higher feedback overhead than the SU-MIMO transmitting the PMI.

### Disclosure

### Technical Problem

Accordingly, the present invention provides a method and an apparatus for selecting a precoder of a UE in a wireless communication system.

Further, the present invention provides a method and an apparatus in which a MU-MIMO system uses only the same feedback information as that of a SU-MIMO to select a precoder in order to minimize interference between UEs.

Moreover, the present invention provides a method and an apparatus for selecting a set of UEs to be supported and precoders for each UE, which can minimize interference between UEs by using PMI information fed back by each UE.

Furthermore, the present invention provides a method and an apparatus for selecting precoders for each UE, which use a long term measurement based precoding for PMI information fed back by a UE in order to avoid multiple access interference between UEs.

In addition, the present invention provides a method and an apparatus for selecting a set of UEs to be supported and a precoder for each UE, which can minimize interference between UEs, through a first-order prediction scheme or a second-order or a higher-order prediction scheme, according to a long term measurement based precoding of PMI information fed back by each UE.

Further, the present invention provides a method and an apparatus for performing a dynamic switching between an SU-MIMO and an MU-MIMO by using a long term measurement based precoding for feedback information of a UE.

### Technical solution

In accordance with an aspect of the present invention, there is provided a method of selecting a precoder of a UE (User Equipment) by a BS (Base Station) in a Mutiple User-Multiple Input Multiple Output (MU-MIMO) antenna system, the method including receiving direct or processed information on channel state in a SU-MIMO from each UE; and determining a precoder causing the least interference between UEs for the received information extracted by using the channel state information based on a long term measurement.

According to another aspect of the present invention, there is provided a method of selecting a UE by a BS in an MU-MIMO antenna system, the method including receiving information extracted by using channel state information from a UE; and determining two or more UEs causing the least interference between UEs as a set of UEs to be supported, with reference to the received information extracted by using the channel state information during a determined time.

According to another aspect of the present invention, there is provided a switching method by a BS supporting a Single User-MIMO (SU-MIMO) antenna and an MU-MIMO, the switching method including receiving information on a PMI and/or a CQI fed back from two or more UEs in a MU-MIMO system by a BS; extracting multiple access interference between UEs by using the received information; determining a set of UEs to be supported causing the least interference between the two or more UEs; selecting a precoder for each UE included in the set of UEs to be supported; and performing switching between an SU-MIMO mode and an MU-MIMO mode according to a capability prediction value of the MU-MIMO mode and a capability prediction value of the SU-MIMO mode in consideration of information on the determined UEs to be supported and the selected precoder, wherein the information for estimating the downlink channel state contains at least one of information on a Channel Quality Indicator (CQI) measured by the UE and information on a PMI selected for ensuring a reception channel capability of a downlink of the UE.

According to another aspect of the present invention, there is provided an apparatus for supporting an SU-MIMO antenna and an MU-MIMO, the apparatus including a receiver for receiving precoding related indication information, which is information extracted after a downlink channel measurement, from a UE; a storing unit for storing the precoding related indication information received during two or more feedback cycles from two or more UEs; and a precoder selector for determining precoding information for each UE causing the least interference between UEs by using the precoding related indication information stored in the storing unit.

According to another aspect of the present invention, there is provided an apparatus for selecting a UE, the apparatus including a receiver for receiving PMI information fed back from two or more UEs in a MU-MIMO system; a storing unit for storing the PMI information from the two or more UEs transmitted during two or more feedback cycles; and a UE selector for selecting a set of UEs to be supported by a MU-MIMO causing the least interference between UEs by using the PMI information stored in the storing unit.

According to another aspect of the present invention, there is provided an apparatus for supporting an SU-MIMO antenna and an MU-MIMO, the apparatus including a receiver for receiving precoding matrix index information, which is information extracted by using channel state information, from two or more UEs in an MU-MIMO mode; an MU-MIMO supporting unit for determining UEs to be supported causing the least interference between the two or more UEs by using the precoding matrix index information from the two or more UEs transmitted during two or more feedback cycles, predicting a capability in an MU-MIMO through precoders for each UE of the determined UEs to be supported, and transferring the predicted capability to a switching unit; an SU-MIMO supporting unit for determining a precoder of a UE, which is to be supported, from information (PMI) extracted by using channel state information from a UE in an SU-MIMO mode, predicting a capability in the SU-MIMO mode, and transferring the predicted capability to the switching unit; and the switching unit for performing switching between SU-MIMO and MU-MIMO modes based on information transferred from the MU-MIMO supporting unit and the SU-MIMO supporting unit.

According to another aspect of the present invention, there is provided a method of feeding back channel information of a UE in an MU-MIMO antenna system, the feedback method including receiving reference signals from a long term BS; estimating a downlink reception channel by using the received reference signals; selecting a precoding matrix suitable for the estimated channel; feeding back a precoding matrix index for the precoding matrix to the BS; and feeding back a plurality of companion precoding matrix information causing less interference when the BS uses the precoding matrix in order to select a UE to be supported by an MU-MIMO.

According to another aspect of the present invention, there is provided a method of receiving a channel by a BS in an MU-MIMO antenna system, the method including receiving a feedback of a precoding matrix index for a precoding matrix suitable for a long term downlink reception channel from one or more UEs; and receiving a feedback of a plurality of companion precoding matrix information causing less interference when the BS uses the precoding matrix from the one or more UEs such that the BS selects a UE to be supported by an MU-MIMO.

According to another aspect of the present invention, there is provided a terminal in an MU-MIMO antenna system, including a reference signal receiving means for receiving reference signals from a long term BS; a channel information searching means for estimating a downlink reception channel by using the received reference signals, selecting a precoding matrix suitable for the estimated channel, feeding back a precoding matrix index for the precoding matrix to the BS, and feeding back a plurality of companion precoding matrix information causing less interference such that the BS selects a UE to be supported by an MU-MIMO when the BS uses the precoding matrix.

### Brief Description of the Drawings

The foregoing and other objects, features and advantages of the present invention will become more apparent from the following detailed description when taken in conjunction with the accompanying drawings in which:
FIG. 1 is a view schematically illustrating a wireless communication system to which an embodiment of the present invention is applied.
FIG. 2 illustrates an operation process of a channel information feedback of a UE in a MIMO system supporting an SU-MIMO.
FIG. 3 illustrates an example of a feedback process of a UE in SU-MIMO and MU-MIMO systems to which the present invention may be applied.
FIG. 4 is a flowchart of a MIMO switching method and a precoding by a base station to which the present invention is applied.
FIG. 5 illustrates a construction of a precoding determining apparatus based on a long term measurement according to an embodiment of the present invention.
FIG. 6 illustrates a construction of a UE selecting apparatus based on a long term measurement according to an embodiment of the present invention.
FIG. 7 illustrates a construction of a switching apparatus between an SU-MIMO and an MU-MIMO according to an embodiment of the present invention.
FIG. 8 is a flowchart of a precoder selecting method based on a long term measurement according to an embodiment of the present invention.
FIG. 9 is a flowchart of a method of selecting a UE to be supported based on a long term measurement according to an embodiment of the present invention.
FIG. 10 is a flowchart of a switching method between an SU-MIMO and an MU-MIMO according to an embodiment of the present invention.
FIG. 11 illustrates a construction of an MU-MIMO transmitting apparatus including a precoder selecting apparatus and a UE selecting apparatus according to an embodiment of the present invention.
FIG. 12 is a view illustrating an SIR gain according to the reported best companion precoders.

### Best Mode

### Mode for Invention

Hereinafter, exemplary embodiments of the present invention will be described with reference to the accompanying drawings. In the following description, the same elements will be designated by the same reference numerals although they are shown in different drawings. Further, in the following description of the present invention, a detailed description of known functions and configurations incorporated herein will be omitted when it may make the subject matter of the present invention rather unclear.

In addition, terms, such as first, second, A, B, (a), (b) or the like may be used herein when describing components of the present invention. Each of these terminologies is not used to define an essence, order or sequence of a corresponding component but used merely to distinguish the corresponding component from other component(s). It should be noted that if it is described in the specification that one component is "connected," "coupled" or "joined" to another component, a third component may be "connected," "coupled," and "joined" between the first and second components, although the first component may be directly connected, coupled or joined to the second component.

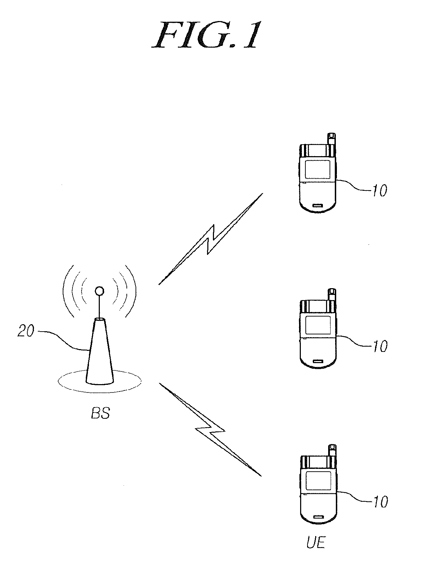

FIG. 1 is a view schematically illustrating a wireless communication system to which an embodiment of the present invention is applied.

The wireless communication system is widely arranged to provide various communication services such as voice and packet data services.

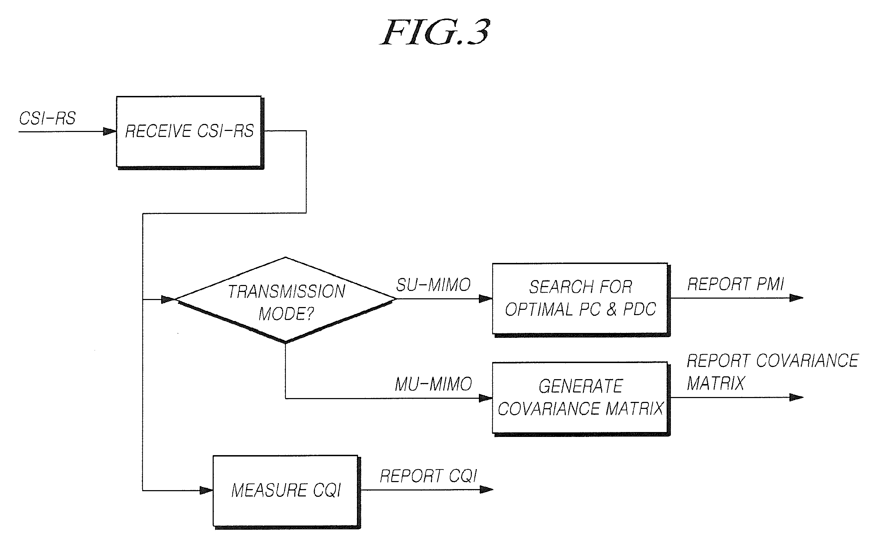

Referring to FIG. 1, a wireless communication system includes a UE 10, and a Base Station (BS) 20. The UE 10 and the BS 20 use a long term measurement based precoder selecting method, a UE selecting method, and a switching method, which will described later. The long term measurement based precoder selecting method, the UE selecting method, and the switching method will be described in more detail with reference to FIGs. 3 to 12.

First, in FIG. 1, the UE 10 is a generic concept indicating a user terminal in a wireless communication system, and should be interpreted as a concept including all of a WCDMA and a LTE, a UE in an HSPA, a MS (Mobile Station), a UT (User Terminal), a SS (Subscriber Station), and a wireless device in a GSM.

In general, the BS 20 or a cell refers to a fixed station communicating with the UE 10, and may be referred to as other terms such as a node-B, eNB (evolved Node-B), a BTS (Base Transceiver System), an access point, and a relay node.

That is, the BS 20 or a cell according to the present invention should be interpreted as a generic concept indicating some areas covered by a BSC in a CDMA and a NodeB in a WCDMA, and is a concept including various coverage areas such as communication ranges of a megacell, a macrocell, a microcell, a pococell, a femtocell, and a relay node.

The UE 10 and the BS 20 according to the present invention are used as a generic meaning, which are transmitting/receiving subjects used to implement a technology or a technological idea described in the present disclosure, and the are not limited by a specifically designated term or word.

A multiple access scheme applied to a wireless communication system has no limitation, and the wireless communication system can use various multiple access schemes such as a CDMA (Code Division Multiple Access), a TDMA (Time Division Multiple Access), an FDMA (Frequency Division Multiple Access), an OFDMA (Orthogonal Frequency Division Multiple Access), an OFDM-FDMA, an OFDM-TDMA, and an OFDM-CDMA.

A TDD (Time Division Duplex) scheme corresponding to a transmission using different times may be used for an uplink transmission and a downlink transmission, or an FDD (Frequency Division Duplex) scheme corresponding to a transmission using different frequencies may be used for an uplink transmission and a downlink transmission.

The power allocation technology according to an embodiment of the present invention may be applied to resource allocations of an asynchronous wireless communication field evolving into an LTE (Long Term Evolution) and an LTE-advanced via a GSM, a WCDMA, and an HSPA, and a synchronous wireless communication field evolving into a CDMA, a CDMA-2000, and a UMB. The present invention should not be interpreted as a limited and restricted concept to a specific wireless communication field, but should be interpreted as a concept including all technical fields, to which ideas of the present invention can be applied.

A communication system to which embodiments of the present invention are applied can support uplink and/or downlink HARQ, and can use a CQI (Channel Quality indicator) for a link adaptation. Further, multiple access methods for a downlink transmission and an uplink transmission may be different from each other, for example, the downlink may use an OFDMA (Orthogonal Frequency Division Multiple Access) and the uplink may use an SC-FDMA (Single Carrier-Frequency Division Multiple Access).

Layers of a radio interface protocol between a UE and a network may be divided into a first layer (L1), a second layer (L2), and a third layer (L3) based on three lower layers of an Open System Interconnection (OSI) model widely known in a communication system. A physical layer included in the first layer provides an information transfer service using a physical channel.

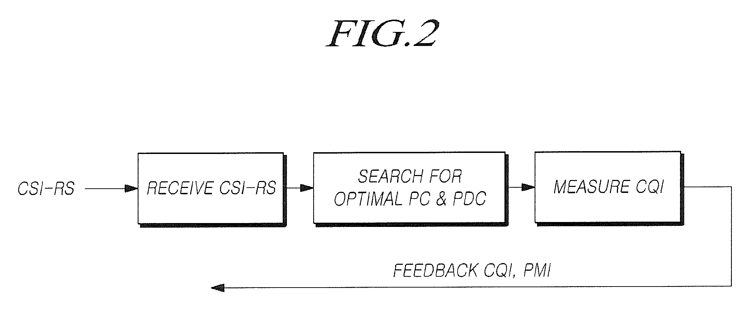

FIG. 2 illustrates an operation process of a channel information feedback of a UE in a MIMO system supporting an SU-MIMO.

First, a CSI-RS is a reference signal transmitted by a BS in order to enable a UE to estimate a downlink channel, a CQI (Channel Quality Indicator) refers to an uplink sub-channel periodically or aperiodically transmitting channel quality information on a quality of a wireless channel measured by a UE to a BS, and a Precoding Matrix Index (hereinafter, referred to as a "PMI") is an indicator for indicating an optimal precoding matrix to be used in consideration of a downlink channel received by a UE or a measured channel state.

Accordingly, the UE receives the CSI-RS to estimate the downlink channel, and searches for a post-decoding (hereinafter, referred to as "post-decoding" or "PDC") method and a precoding (hereinafter, referred to as "precoding" or "PC") method best fitted for the estimated channel.

In other words, the UE estimates the channel through the CSI-RS, and then can select a precoder, that is, a precoding codeword fitted for the estimated channel, which can maximally secure a downlink receiving capability.

Through the process, the UE estimates a channel quality, which can be obtained, and transmits information on a precoder, which is determined to be best fitted for the estimated channel by using a PMI to the BS. At this time, the channel quality, which can be determined to be obtained, may be transmitted through a CQI or a channel path gain (or channel propagation gain) estimated through the CSI-RS may be transmitted through the CQI.

Meanwhile, as shown in FIG. 1, when all UEs accessing one BS operate in the same way of FIG. 2, the BS can grasp only a channel state of each UE, and cannot obtain information on interference which each UE encounter in a MU-MIMO environment.

Accordingly, a problem may occur in which a proper capability is not supported to the UE when a method is changed from an SU-MIMO to an MU-MIMO or the MU-MIMO method is operated.

That is, when the UE generates a CQI and a PMI in the same way as a rank 1 feedback of the SU-MIMO to transmit them to the BS, the UE does not transmit information related to the same channel interference by another UE scheduled in the BS, and accordingly the CQI transmitted by the corresponding UE to the BS has a difference from an actual channel environment because the CQI does not reflect an interference condition between UEs.

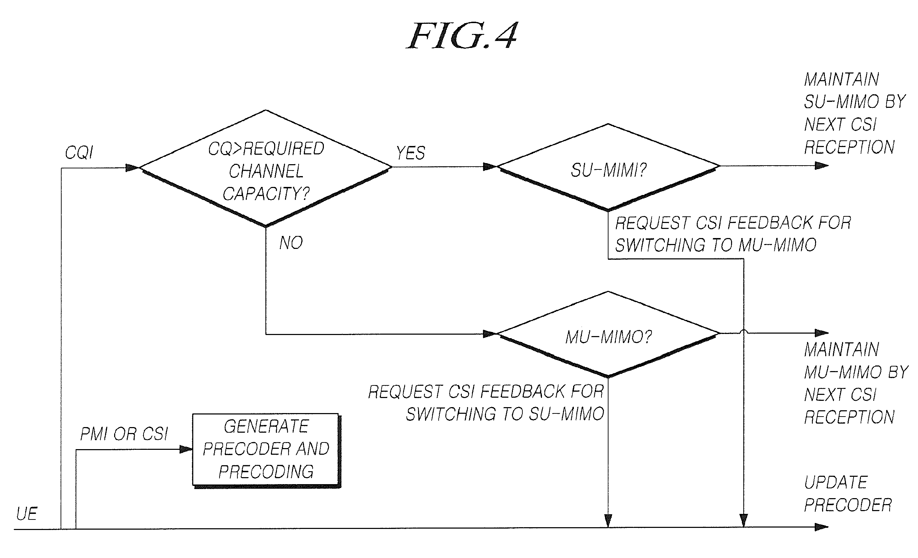

In order to solve the problem, the MU-MIMO system performs a UE channel information feedback same as that of FIGs. 3 and 4.

FIG. 3 illustrates an example of a feedback process of a UE in SU-MIMO and MU-MIMO systems to which embodiments of the present invention may be applied.

As shown in FIG. 3, each UE receives a CSI-RS from a BS to estimate a channel state according to the method of FIG. 2. And then the UE performs a CQI feedback process of feeding back the estimated channel state to the BS and identifies a transmission mode at the same time. As a result of the identification, when the identified transmission mode is an SU-MIMO, the UE feeds back a PMI after searching for an optimal PreCoder (PC) or Post-DeCoder (PDC).

Meanwhile, as a result of the identification of the transmission mode, when the transmission mode is an MU-MIMO, the UE generates a covariance matrix or a vector with another UE and feeds it back to the BS.

The BS receiving the covariance matrix and the PMI of each UE first switches whether to support the SU-MIMO or the MU-MIMO by using the CQI, the PMI, and the covariance matrix. When the BS supports the MU-MIMO, the BS selects UEs to be supported and precodes data to a precoding matrix corresponding to each UE. Description for the process will be discussed in more detail with reference to FIG. 4.

However, in such a method, a covariance matrix and a vector generally have a large size of data in comparison with a PMI in an SU-MIMO, so that there is a disadvantage of increasing a feedback overhead.

FIG. 4 is a flowchart of a MIMO switching method and a precoding by a BS.

Referring to FIG. 4, a BS receives feedback of a PMI, a CSI, and a CQI for each propagation channel from a UE, determines a precoder for each UE from the PMI or the CSI, and performs a precoding according to a precoding matrix as shown in FIG. 3.

Further, the BS identifies whether a channel quality (hereinafter, referred to as a "CQ") exceeds a required channel capacity from a CQI of a specific UE transmitting the feedback to the BS. When the CQ exceeds the required channel capacity and the BS supports the SU-MIMO, the BS requests CSI feedback from the UE for a switching to the MU-MIMO while maintaining the current SU-MIMO until the BS receives a next CSI from the UE.

When the CQ does not exceed the channel capacity and the BS supports a current MU-MIMO, the BS requests the CSI feedback from the UE for a switching to the SU-MIMO while maintaining the current MU-MIMO until the BS receives a next CSI from the UE.

That is, as shown in FIG. 3, each UE uses a reference signal to estimate a downlink propagation channel, determines a precoding method suitable for the estimated propagation channel, and measures a channel capacity or a channel quality by using the reference signal at the same time in performing the SU-MIMO.

A PMI is reported to the BS as information on a precoder to be applied for each UE, and a CQI is reported to the BS as information on measured channel capacity/channel quality.

Here, one precoder should logically exist for each UE, and the precoder may be a physically independent block for each UE according to an implementation method. Alternatively, the precoders are logically designated to a signal physical block to sequentially generate a precoder for a UE and perform a precoding according to channel information reported by each UE, or may simultaneously perform a precoding for a UE according to a precoding method.

Meanwhile, in performing the MU-MIMO, the BS should grasp correlations between channels of UEs. Each UE transmits Channel State Information (CSI) on a propagation channel of a channel matrix to the BS in various forms, and the BS compares the channel information transmitted by each UE to grasp the correlation between channels of UEs. The BS selects a SU/MU-MIMO mode and each UE determines a feedback method according to a command of the BS.

As shown in FIG. 4, the BS notifies the UE of transmission mode switching in the following conditions.

First, the condition corresponds to a case where switching to the SU-MIMO is required because a channel capacity of a UE accessing by an MU-MIMO is small, and second, the condition corresponds to a case where it is required to attempt switching to an MU-MIMO because a required information transmission rate of a UE accessing by an SU-MIMO is small in comparison with a channel capacity.

In the transmission mode switching cases as described above, the BS determines transmission mode switching and requests to switch a feedback method to the corresponding UE.

At this time, if the corresponding UE receives the request for the transmission mode switching and switches a feedback mode, a delay according to the mode switching is generated by a new feedback transmission. The delay may be referred to as a mode switching delay.

Further, in a case of using the method of FIGs . 3 and 4, a problem occurs in which a capability after the mode switching cannot be recognized. That is, when an access method of a UE receiving a service through an SU-MIMO is changed to an access method through an MU-MIMO, a degree of the performance degradation and a degree of the performance enhancement when the MU-MIMO supporting the UE is switched to the SU-MIMO cannot be recognized. A more severe case between the two cases corresponds to a case where the SU-MIMO is switched to the MU-MIMO and in this case, fast switching is actually impossible because the performance degradation cannot be predicted.

In short, as shown in FIGs. 3 and 4, in a case where a covariance matrix or a vector is used to feedback information on the correlation between channels of UEs under a support by the MU-MIMO, a feedback overhead is increased and there is a drawback in that dynamic switching or fast switching is difficult because a delay is generated when the BS performs switching between the SU-MIMO and the MU-MIMO and a capability after the switching cannot be predicted.

In order to solve the problems, the present invention discloses a method of receiving feedback of information extracted by using channel state information of the SU-MIMO in the MU-MIMO system and selecting a long term measurement based precoding.

Further, the present invention discloses a method of selecting a UE to be supported in the MU-MIMO by using precoding codeword information of each UE determined by a long term measurement based precoding measuring and receiving two or more extracted information (for example, PMI) from each UE.

Moreover, the present invention discloses a method of performing dynamic switching between the SU-MIMO and the MU-MIMO by using a precoding codeword of each UE determined by a long term measurement based precoding.

More specifically, a method of determining the codeword according to the present invention includes a step in which a BS receives a feedback of PMI information from two or more UEs in an MU-MIMO system, a step of storing PMIs transmitted during two or more feedback cycles, and a step of determining a precoder of each UE allowing interference between UEs to be minimized from the PMI during the stored two or more feedback cycles. Here, determining of the precoder according to the present invention includes directly selecting the precoder by the BS, or further includes selecting the precoder after identifying a precoding method suitable for a channel estimation of each UE, that is, a precoding codeword to be used by a corresponding precoder from a codebook having a set size. Further, the selected precoding codeword is used as an equal concept with Ci, which is a precoder or a precoding matrix. Hereinafter, for the convenience of descriptions, the precoding codeword is referred to as a precoder.

Channel state feedback information transmitted from a UE in order to select a precoder and a UE for minimizing interference may be PMI, but the present invention is not limited thereto. For the channel state feedback information, one of feedback information used to inform the BS of a channel state by the UE may be used in another current communication system or a communication system to be newly developed in the future. However, the present invention describes the PMI as a representative example of feedback information extracted by using channel state information.

In other words, a precoding matrix index (or precoder codeword selector, PMI) according to the present invention corresponds to information through which the UE reports the BS of a selected precoder, which is determined to be suitable for a downlink channel estimated by each UE and then directly selected by the UE. The precoding matrix index includes information obtained through a channel measurement except the PMI, or information for helping selecting a precoder by the BS. The PMI may be transmitted to the BS through a feedback by the UE or a direct signaling.

A method of selecting a UE to be supported in the MU-MIMO system according to embodiments of the present invention includes a step in which the BS receives a feedback of PMI information from two or more UEs in the MU-MIMO system, a step of storing the PMIs transmitted during two or more feedback cycles, and a step of selecting two or more UEs minimizing interference between UEs as the UE to be supported, from the PMI transmitted during two or more feedback cycles.

A step of selecting a precoding codeword, a precoder, or a precoding matrix for each UE such that interference between UEs is minimized, or a step of selecting a UE to be supported by the MU-MIMO may be implemented by applying a first-order prediction scheme and a second-order prediction scheme based on a PMI of each UE transmitted during two or more feedback cycles.

Further, in another embodiment of the present invention, a step of selecting a precoding codeword, a precoder, or a precoding matrix for each UE such that interference between UEs is minimized, or a step of selecting a UE to be supported by the MU-MIMO may be implemented by applying a first-order prediction scheme or a second-order prediction scheme based on a PMI of each UE transmitted during two or more feedback cycles and the best companion information together.

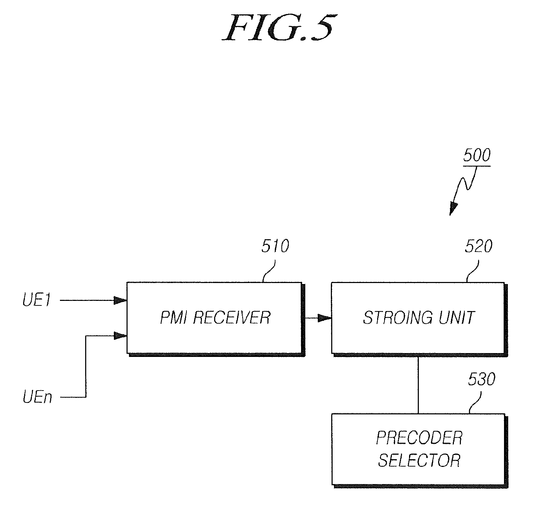

FIG. 5 illustrates a construction of a long term measurement based precoding determining apparatus according to an embodiment of the present invention.

Referring to FIG. 5, a long term measurement based precoding determining apparatus 500 is included within a BS, and includes a receiver 510 for receiving PMI information fed back from a UE, a storing unit 520 for storing PMI information from two or more UEs transmitted during two or more feedback cycles, and a precoder selector 530 for determining precoding information for each UE, which can minimize interference between UEs, by using the PMI information stored in the storing unit 520.

A long term measurement based precoding according to the present invention is a generic meaning of selecting a precoding codeword or a precoder by using two or more PMIs, and should be interpreted as a concept distinguished from a long term precoding taking a time average.

The precoder selector 530 selects a precoding codeword or a precoder for each UE, which can minimize interference, by using one or more schemes of a first-order prediction scheme or a second-order or higher-order prediction scheme based on the PMI information as shown in table 1 stored in the storing unit.

A detailed operation of the precoder selector will be described again with reference to tables 1 to 9 below.

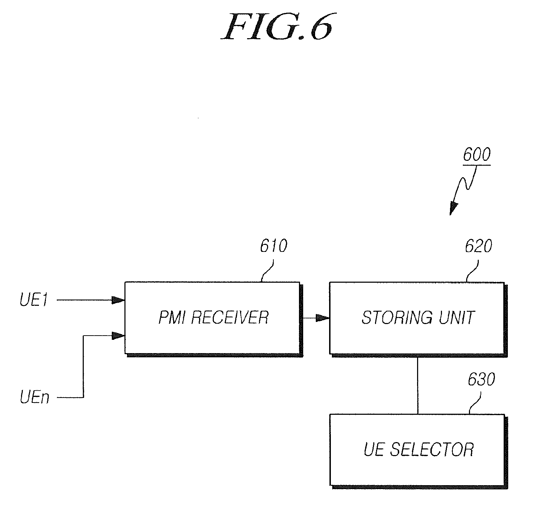

FIG. 6 illustrates a construction of a long term measurement based UE selecting apparatus according to an embodiment of the present invention.

Referring to FIG. 6, a long term measurement based UE selecting apparatus 600 is included within a BS, and includes a receiver 610 for receiving PMI information fed back from two or more UEs in an MU-MIMO system, a storing unit 620 for storing PMI information from two or more UEs transmitted during two or more feedback cycles, and a precoder selector 630 for selecting a UE set to be supported by the MU-MIMO, which can minimize interference between UEs, by using the PMI information stored in the storing unit.

The UE selector 630 performs a function of selecting the UE set to be supported by the MU-MIMO, which can minimize interference between UEs, by using one or more schemes of a first-order prediction scheme or a second-order or a higher-order prediction scheme based on the PMI information as shown in table 1 stored in the storing unit 620.

A detailed operation of the UE selector 630 will be described again with reference to tables 1 to 9 below.

Referring to more detailed functions of the precoder selector 530 and the UE selector 630, for example, when PMIs from five UEs (UE0 to UE4) are stored in the storing unit 520 during 3 feedback cycles (T0 to T2) as shown in table 1, the precoder selector 530 and the UE selector 630 determine a precoder for each UE and a UE set to be supported by the MU-MIMO through the following process.

**[Table 1]**

| **PMI** | **T₀** | **T₁** | **T₂** |
|---|---|---|---|
| **U₀** | C₀ | C₀ | C₁ |
| **U₁** | C₂ | C₅ | C₂ |
| **U₂** | C₂ | C₂ | C₃ |
| **U₃** | C₄ | C₄ | C₄ |
| **U₄** | C₄ | C₄ | C₅ |

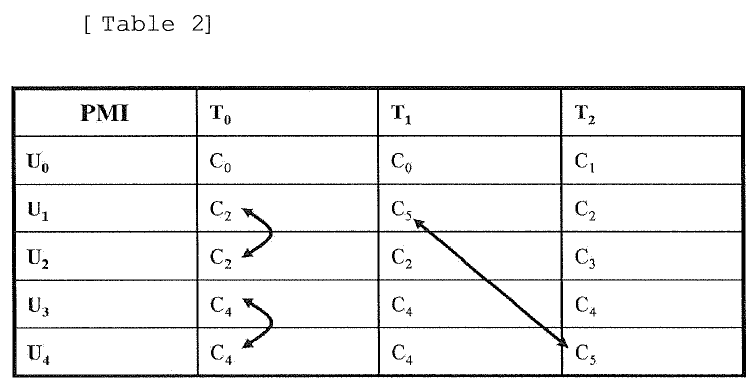

A BS obtains information on a transmission capacity, which is predicted to be supportable in every MU-MIMO implementation, and a transmission capacity, which is predicted to be supportable in every SU-MIMO implementation, and compares the information with other information (for example, an information transmission rate desired by a UE) to determine whether to access the SU/MU-MIMO.

The UE can feedback channel information regardless of SU/MU-MIMO operations, so that the BS may or may not inform the UE whether SU/MU-MIMO is switched.

In an embodiment of the present invention, a method of selecting a precoder and a UE through a first-order prediction scheme and a second-order or a higher-order prediction scheme performed by the precoder selector 530 and the UE selector 630 includes the following two steps.

A first step is to grasp multiple access interference or a PMI corruption through the PMI stored in the storing units 520 and 620. For example, the first step corresponds to a step of identifying whether a first-order PMI corruption is generated or second-order and higher-order PMI corruptions are generated as shown in tables 1 to 3.

A second step is to select a UE set to be supported and a precoder or a PMI such that interference is minimized by using a first-order prediction scheme or a second-order or a higher-order prediction scheme based on the existence of the corruption generation.

For example, the second step corresponds to a method of selecting a PMI and a UE to be supported based on the UE and a method of selecting a PMI and a UE to be supported based on the PMI.

Table 1 is an example of the PMI, which is stored in the storing unit, reported by each UE, and table 2 is an example a first-order PMI corruption measuring a PMI corruption based on a PMI table as shown in table 1.

Arrows in table 2 refer to the generation of PMI errors between different UEs, and only a first generated corruption is indicated and a corruption is not indicated when the same PMI corruption between the same UEs is generated (that is, the same pattern corruption is generated).

An example of a process of selecting a UE set to be supported and a precoding codeword (precoder) through a first-order prediction scheme is discussed in the following description.

In the first-order prediction scheme, a precoder, which has no precoder overlapped with a precoder of another UE, will be simply determined as a precoder of a corresponding UE. For example, in table 2, a possible precoder for U0 is C0 or C1, so that all UEs using one or more of C2 to C5, which are not overlapped with C0 and C1, can be selected as a UE to be supported. Of course, precoders of the selected UEs should not be overlapped at all.

When applying a first-order prediction scheme to a PMI table as shown in table 2, a set of two UEs and possible precoders may be (U0, U1)={(C0, C2) or (C0, C5) or (C1, C2) or (C1, C5)}, and a set of 3 UEs may be (U0, U2, U3)={(C0, C2, C4) or (C1, C2, C4) or (C0, C5, C4) or (C1, C5, C4)}. Of course, a set of 2 UEs or a set of 3 UEs different from the above constructions may be selected.

However, since the first-order prediction scheme simply assumes only a case where there is primarily no conflict between precoders, the accuracy may be decreased when there is a possibility of a secondary conflict.

Accordingly, a second-order and a higher than the second-order prediction schemes may be used, and tables 3 to 7 describe a method of selecting a set of UEs to be supported and precoders through the second-order prediction scheme.

Tables 3 to 5 illustrate a process of identifying a second-order PMI corruption in a PMI table as shown in table 2 and determining a set of UEs to be supported and precoders through the second-order prediction scheme.

Table 3 below shows a second-order PMI corruption relation inferred from a left upper end arrow indicating the first-order PMI corruption shown in table 2. The left upper end arrow means that multiple access interference (MAI) between UE1 and UE2 is generated when a signal precoded to C2 is transmitted to one of the two UEs since both of UE1 and UE2 feedback C2 to the PMI.

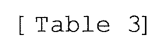

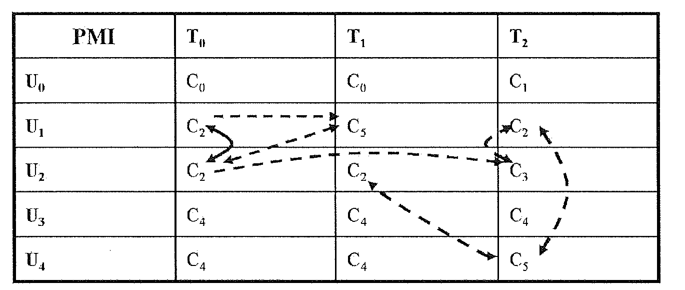

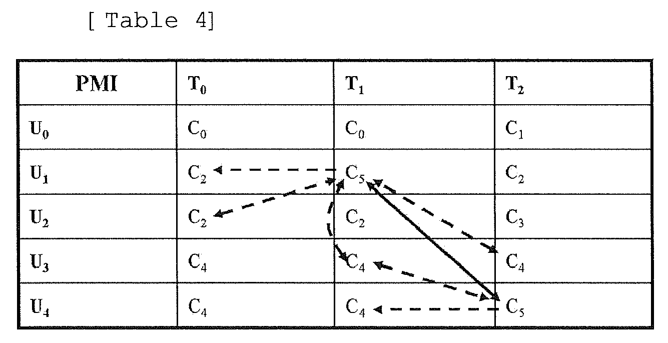

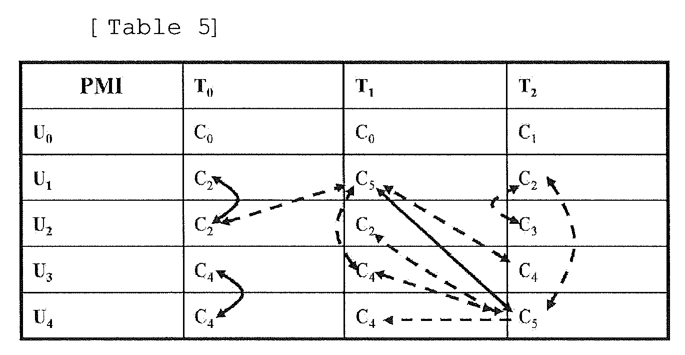

U1 requires C2 or C5 within T0 to T2, which are consideration sections. This means that a channel of UE1 is best fitted for C2, but has a high suitability for C5 within the consideration section. When U2 requires C2 within the consideration sections T0 to T2, if U1 precodes a signal by using C5 and transmits the signal although the U1 has not required C5, it may be inferred that D1 generates interference for U2 from a fact that U1 having a high suitability for the same precoder C2 also has a high suitability for C5. A dotted left side arrow indicates a logic flow for inferring multiple access interference (MAI) by the second-order relation. Accordingly, when U2 precodes a signal by using C2, a C5 transmission may cause interference for U2 (dotted right side arrow).

Table 4 shows a second-order PMI corruption relation referred from a right side arrow indicating the first-order PMI corruption shown in table 2.

In table 4, by a similar reason described for table 3, a precoding performed using C2 and C4 causes multiple access interference (MAI) when U1 receives a signal by using C5, and a precoding using C4 causes multiple access interference for U4 when U4 receives a signal by using C5 as a precoder. Similarly, when a signal of U2 is precoded using C3 and a signal of U1 is precoded using C2, multiple access interference between U1 and U2 is caused. Table 4 shows only some multiple access interference for simplicity.

Table 5 synthetically illustrates second-order PMI corruption relations described in tables 3 and 4.

The second-order prediction scheme predicts the second-order multiple access interference to set UEs, in which the second-order PMI corruption is not generated, as a set of UEs to be supported, and at this time, determines a precoder having no second-order PMI corruption as a precoder of each UE.

**[Table 6]**

| | Possible UE | Precoder |
|---|---|---|
| 2 UE | (U₀, U₁) | (C₀, C₂) |
| | (U₀, U₂) | (C₀, C₂) |
| | (U₀, U₃) | (C₀, C₄) |
| | (U₀, U₄) | (C₀, C₄) |
| | (U₂, U₃) | (C₂, C₄) |
| 3 UE | None | |

**[Table 7]**

| | Possible UE | Precoder |
|---|---|---|
| 2 UE | (U₀, U₁) | (C₀, C₂) |
| | (U₀, U₂) | (C₀, C₂) |
| | (U₀, U₃) | (C₀, C₄) |
| | (U₀, U₄) | (C₀, C₄) |
| | (U₁, U₃) | (C₂, C₄) |
| | (U₂, U₃) | (C₃, C₄) |
| | (U₂, U₄) | (C₃, C₄) |
| 3 UE | (U₀, U₁, U₃) | (C₀, C₂, C₃) |

Table 6 illustrates information on a set of UEs and precoders selected through a method of selecting a set of UEs to be supported and precoders by applying a UE based second-order prediction scheme, and determines a set of UEs to be supported through a method of not supporting the MU-MIMO for UEs reported as UEs, which can cause a second-order corruption within a section. A precoder (for example, a PMI most frequently fed back) determined to be best fitted for transmitting a signal is selected as a precoder of a corresponding UE. A BS selects a set of UEs and precoders shown in table 6 according to various scheduling schemes and then uses the selected set of UEs and precoders.

Table 7 illustrates information on a set of UEs and precoders selected through a method of selecting a set of UEs to be supported and precoders by applying a PMI based second-order prediction scheme. As shown in table 7, precoders or precoder codewords, which do not cause the first-order and second-order corruptions, are simultaneously used, and a UE is naturally selected in this process. For example, when UE2 uses C2 as a precoder, it generates interference with UE3 using C4. However, when UE2 uses C3 as a precoder, interference is not generated between UE1 and UE2, so that (UE2, UE3)=(C3, C4) is selected.

A BS selects a set of UEs and precoders shown in table 7 according to various scheduling schemes and then uses the selected set of UEs and precoders.

As described above, when a set of UEs and precoders, which allow multiple access interference to be minimized, according to embodiments of the present invention, are determined, it is possible to selectively use a first-order prediction scheme or a second-order or a higher-order prediction scheme and there is an advantage of selecting a set of UEs and precoders according to multiple resolutions based on a channel environment or the number of accessing users.

Meanwhile, another embodiment of the present invention may determine a set of UEs to be supported and precoding codewords (precoders) by using both of a least interference precoder or a best companion precoder, which is predicted to generate the least interference when each UE uses a PMI and a fed back PMI, and tables 8 to 9 illustrate the embodiment.

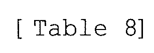

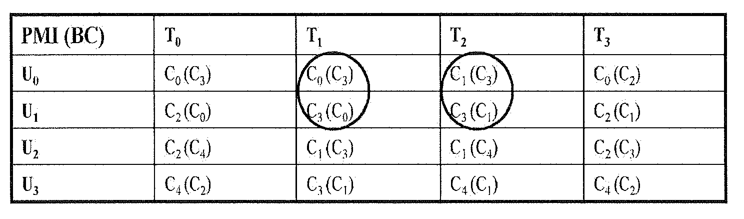

As shown in table 8, when each UE uses a corresponding precoding codeword together with a PMI, information on a best companion precoding codeword causing the least interference may be fed back together. For example, UE0 feeds back C0 to a PMI within a T1 section, and at this time, DEO also feeds back that C3 corresponds to a precoding codeword causing the least interference.

In this case, a set of UEs to be supported and precoding codewords may be determined in the same way by applying the first-order and second-order prediction schemes in accordance with measurements of the first-order and second-order PMI corruptions.

For example, each of UE0 and UE1 can determine C0, or C1 and C2, or C3 as precoding codewords. However, since a case where UE0 uses C0 and UE1 uses C3 is a combination, which can minimize interference, UE0 and UE1 are determined as a set of UEs to be supported and C0 and C3 are selected as precoding codewords, respectively.

Whereas, when even the second-order PMI corruption is considered, there is no available precoding codeword combination between UE0 and UE2 without interference, so that UE0 and UE2 cannot be selected as a set of UEs to be supported (when UE0 uses C0 and UE2 uses C2, there is no first-order PMI corruption but there is interference generated by a second-order relation because UE0 and UE2 have a time zone where UE0 and UE2 share C1 within entire sections).

Table 9 shows a result of selecting a set of UEs to be supported and precoding codewords in consideration of both of a best companion precoding codeword and a PMI in a PMI table as shown in table 8.

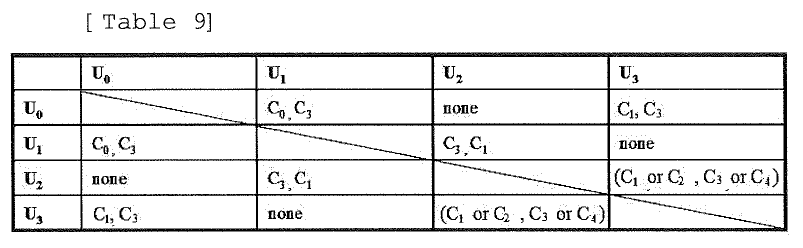

Table 9 shows a result of selecting a set of UEs to be supported and precoding codewords through the same method described above when the best companion precoding codewords (a set of precoders) predicted to generate the least interference are transmitted to a BS in a case where each UE uses a PMI and a fed back PMI.

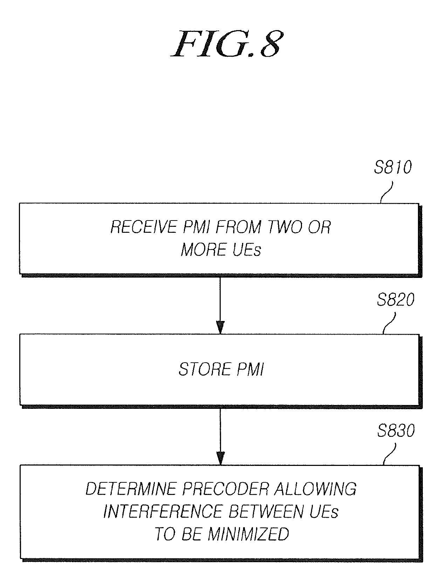

As described above, the MU-MIMO is not possible in sections T₀ and T₃ as shown in FIG. 8 according to the conventional short term precoding method, but UEs to be supported and precoding codewords may be selected and precoded such that multiple access interference between UEs over entire sections are avoided or minimized when the long term measurement based precoding method according to embodiments of the present invention is used.

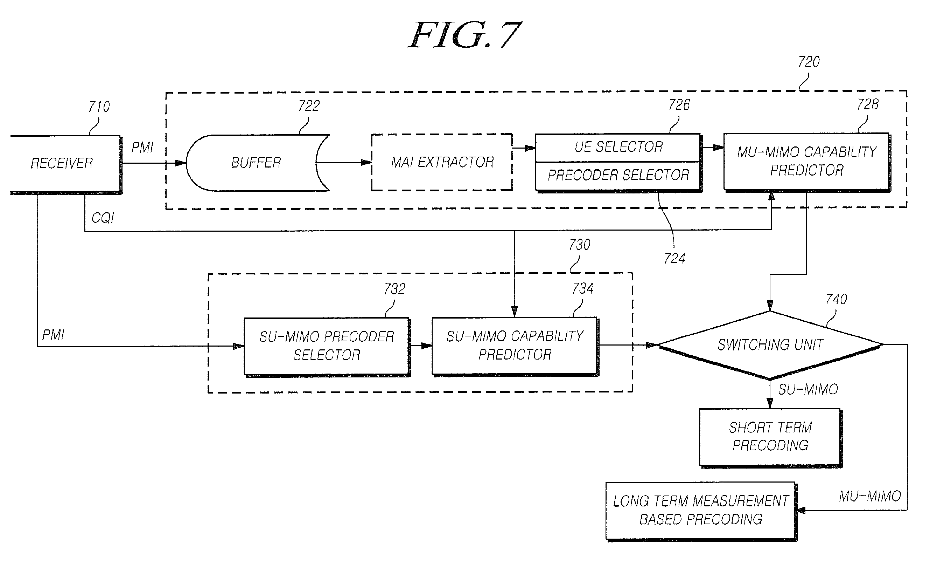

FIG. 7 illustrates a construction of a switching apparatus between an SU-MIMO and an MU-MIMO according to an embodiment of the present invention.

Referring to FIG. 7, a switching apparatus 700 between the SU-MIMO and the MU-MIMO includes a receiver 710 for receiving information on a PMI or a CQI fed back from two or more UEs in a MU-MIMO system, an MU-MIMO supporting unit 720 for determining precoding codewords for each UE and UEs to be supported, which allow interference between UEs to be minimized, by using PMI information from two or more UEs transmitted during two or more feedback cycles and predicting capabilities in the MU-MIMO to transfer the predicted capabilities to a switching unit, an SU-MIMO supporting unit 730 for determining a precoding codeword of a UE, which is to be supported, from a fed back PMI in an SU-MIMO mode and predicting capabilities in the SU-MIMO mode to transfer the predicted capabilities to a switching unit, and the switching unit 740 for performing switching between SU-MIMO and MU-MIMO modes based on information from the MU-MIMO supporting unit and the SU-MIMO supporting unit.

The MU-MIMO supporting unit 720 may include a buffer 722, which is a storing unit, for storing PMI information from two or more UEs transmitted again during two or more feedback cycles, a precoder selector 724 for determining a precoding codeword for each UE allowing interference between UEs to be minimized by using the PMI information stored in the buffer, a UE selector 726 for determining a set of UEs to be supported by the MU-MIMO allowing interference between UEs to be minimized by using the PMI information stored in the buffer, and a capability predictor 728 for predicting a capacity (capability) in the MU-MIMO mode to transfer the predicted capacity to the switching unit.

Further, the SU-MIMO supporting unit 730 may include an SU-MIMO precoder selector 732 for determining a precoder of a UE, which is to be supported, from the PMI feedbacked from the UE in the Su-MIMO mode and an SU-MIMO capability predictor 734 for predicting a capability in the SU-MIMO mode to transfer the predicted capability to the switching unit.

The switching unit 740 performs a function of implementing switching between SU-MIMO and MU-MIMO modes based on information from the MU-MIOMO supporting unit and the SU-MIMO supporting unit, performs the aforementioned long term measurement based precoding in the MU-MIMO mode, and performs a short term precoding, which is a general method, in the SU-MIMO mode.

FIG. 8 is a flowchart of a precoder selecting method based on a long term measurement according to an embodiment of the present invention.

Referring to FIG. 8, the selection of the long term measurement based precoder includes a step in which a BS receives a feedback of a PMI from two or more UEs in an MU-MIMO system (S810), a step of storing the PMI transmitted during two or more feedback cycles in a storing unit (S820), and a step in which the precoder selector determines a precoding scheme for each UE and a precoder, which allow interference between UEs to be minimized, from the stored PMI transmitted during two or more feedback cycles (S830).

Here, in the step (S810), it is described that a BS receives a feedback of a PMI from a UE as an example, but the BS can receive other information by which the BS can infer a reception capability of a downlink channel of the UE. That is, the present invention does not limit feedback information of the UE to the PMI.

For example, the BS may receive explicit information on a downlink reception channel instead of the PMI, information on interference between UEs, or a report by the UE for a higher layer signaling. Further, the BS can receive other information for ensuring a UE reception capability determined by a higher layer and signaled.

Further, the precoding scheme, that is, the determination of the precoder corresponds to the selection of an optimal precoder or precoding matrix for ensuring a reception capability of a downlink channel of each UE, and may correspond to Ci, which is a codebook based selection in the present invention, but is not limited thereto.

A method of determining a precoder from a PMI transmitted during two or more feedback cycles may use the first-order prediction scheme or the second-order prediction scheme such that interference between UEs is minimized as described above, but is not limited thereto.

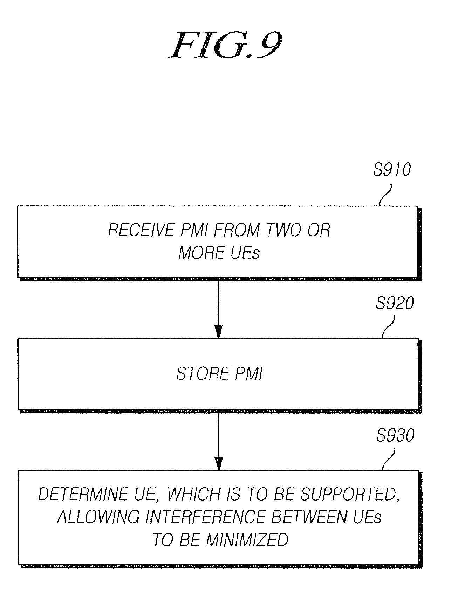

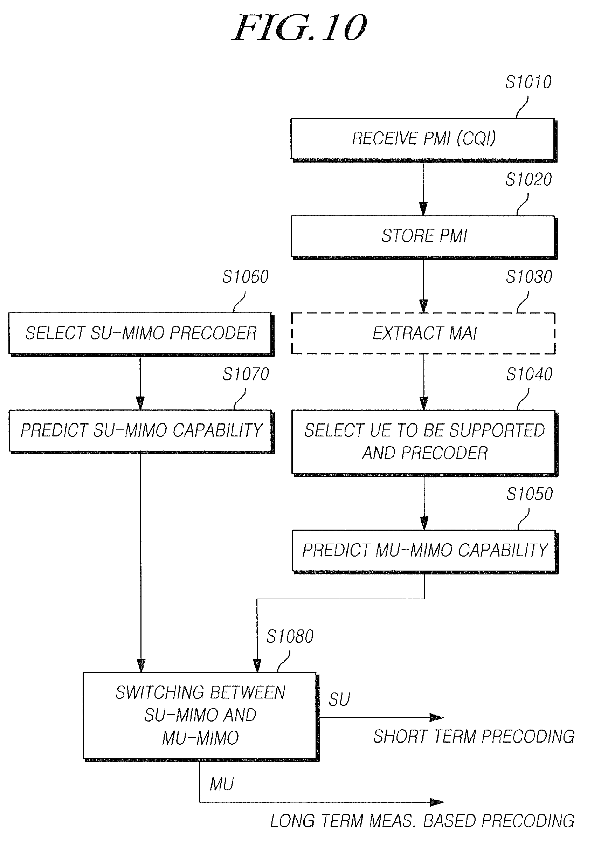

Further, a method of selecting a precoder according to the embodiment may be implemented together with the method of selecting UEs to be supported by the MU-MIMO as shown in FIG. 9 and may be used for the dynamic switching method between the SU-MIMO and the MU-MIMO as shown in FIG. 10.

FIG. 9 is a flowchart of a method of selecting a UE to be supported by the MU-MIMO based on a long term measurement according to an embodiment of the present invention.

Referring to FIG. 9, a method of selecting a UE to be supported in an MU-MIMO system may include a step in which a BS receives a feedback of PMI information from two or more UEs in the MU-MIMO system (S910), a step of storing the PMI transmitted during two or more feedback cycles (S920), and a step of selecting two or more UEs causing the least interference between UEs from the PMI during (S930).

Here, the selection of UEs to be supported by the MU-MIMO allowing interference between UEs to be minimized may be implemented by applying the first-order prediction scheme or the second-order prediction scheme based on the PMI of each UE transmitted during two or more feedback cycles as described above.

More specifically, as described with reference to tables 1 to 9, sets of UEs not causing corruption due to interference between UEs are determined as UEs to be supported by the first-order prediction scheme or the second-order prediction scheme for a PMI for each UE within a long term measurement section such that the PMI of each UE does not support the MU-MIMO for UEs, which can cause the first-order corruption or the second-order corruption, within the long term measurement section.

Alternatively, a combination of precoders causing interference between UEs is searched and then precoders are selected in such a manner that a combination of the precoders to be used for transmitting a signal to each UE does not cause interference, and accordingly UEs are simultaneously selected.

Further, another embodiment of the present invention may be implemented by selecting a precoder for each UE causing the least interference between UEs or applying the first-order prediction scheme or the second-order prediction scheme based on PMI information of each UE transmitted during two or more feedback cycles and the best companion information fed back with the PMI information in a process of selecting UEs to be supported by the MU-MIMO.

FIG. 10 is a flowchart of a switching method between an SU-MIMO and an MU-MIMO according to an embodiment of the present invention.

As shown in FIG. 10, the switching method between the SU-MIMO and the MU-MIMO includes a step in which a BS receives PMI information and/or CQI information fed back from two or more UEs in an MU-MIMO system (S1010), a step of storing PMI information transmitted during two or more feedback cycles in a buffer (S1020), a step of extracting multiple access interference between UEs from the stored PMI information (S1030), a step of determining a set of UEs to be supported by the M-MIMO causing the least interference between UEs and selecting precoder information for each UE (S1040), and a step of predicting capabilities of the MU-MIMO system in consideration of the determined UE to be supported and the selected precoder information (S1050).

Further, the switching method includes a step of selecting a precoder from a PMI fed back from a corresponding UE in a case of an SU-MIMO mode (S1060), a step of predicting capabilities in the SU-MIMO mode (S1070), and a step of performing switching between SU-MIMO and MU-MIMO modes based on an MU-MIMO capability prediction value and an SU-MIMO capability prediction value (S1080).

As a result of switching, the aforementioned long term measurement based precoding is performed in a case of the MU-MIMO mode and a short term precoding, which is a general scheme, is performed in a case of the SU-MIMO mode.

Of course, in the step (S1040) of selecting UEs and precoders for each UE, the first-order or second-order prediction schemes through identifications of the first-order PMI corruption or the second-order or higher-order PMI corruption may be used.

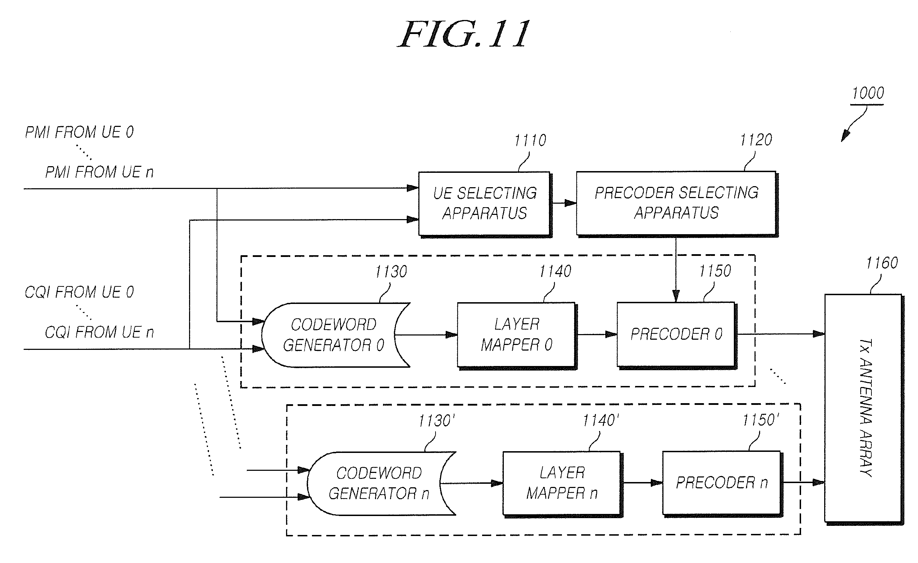

FIG. 11 illustrates a construction of an MU-MIMO transmitting apparatus including a precoder selecting apparatus and a UE selecting apparatus according to an embodiment of the present invention.

Referring to FIG. 11, an MU-MIMO transmitting apparatus 1100 includes a UE selecting apparatus 1110 for determining a set of UEs to be supported causing the least interference based on the PMI received from two or more UEs transmitted during two or more feedback cycles, a precoder selecting apparatus 1120 for determining precoders for each UE included in the set of UEs to be supported, and a precoder allocated for each UE based on precoder information selected through the precoder selecting apparatus.

Here, the MU-MIMO transmitting apparatus 1100 includes codeword generators 1130 and 1130' for generating codewords set for ensuring a channel quality by using CQI fed back from each UE, layer mappers 1140 and 1140' for mapping output signals, to which codewords are applied, to layers of respective antennas, and precoders 1150 and 1150' for each UE for precoding the output signals according to precoder information for each UE determined by the precoding codeword selecting apparatus 1120 in order to ensure a reception capability for each UE, and a transmitting antenna array 1160.

Of course, the UE selecting apparatus 1110 and the precoder selecting apparatus 1120 can use the first-order or second-order prediction scheme through identification of the first-order PMI corruption or the second-order or higher-order PMI corruption. Accordingly, according to the present invention, a BS can receive only the same feedback information (for example, PMI) as that of the SU-MIMO mode in the MU-MIMO system to determine a set of UEs to be supported by the MU-MIMO and a precoder for each UE such that interference between UEs is avoided or minimized, so that there is an effect of using only the same feedback information as that of the SU-MIMO in order to feedback information on a correlation between channels of respective UEs in the MU-MIMO mode.

According to the embodiment, when a set of UEs and precoders causing the least interference are selected, the first-order prediction scheme or the second-order or higher-order prediction scheme may be selectively used, so that there is an advantage in that it is possible to select UEs and precoders according to multiple resolutions depending on a channel environment or the number of accessing user.

Further, according to the embodiment, the BS determines whether an MU-MIMO implementation is possible through only the PMI and CQI reported by each UE, performs the conventional short term precoding in the SU-MIMO mode, and performs the long term measurement based precoding in the MU-MIMO mode. As a result, there is an effect of enabling dynamic switching between the SU-MIMO and the MU-MIMO without the delay.

As described above, the wireless communication system (for example, LTE-A) considers using the MU-MIMO in order to support a much more average transmission amount. The MU-MIMO can achieve an improved frequency efficiency (or spectral efficiency) through a user selection diversity. It is necessary to develop an MAI mitigation or avoidance algorithm for an actual utilization of the MU-MIMO.

An SIR gain of a UE pairing is searched through a maximum received power selection and a larger feedback overhead may be considered for a higher SIR gain.

In some cases, a BS (or eNB) should determine whether to select a UE having higher reception power or a UE having "a better companion precoder". When the BS selects "a better companion precoder", if an improved amount of the SIR is larger than a reduced amount of the SIR caused by a selection of a UE having small UE reception power due to an interference mitigation, a link may be connected through a channel having a larger capacity.

Since each UE informs of a best companion precoder for the corresponding UE, a BS is required to be additionally reported to by each UE about information on an appropriateness degree of the best companion precoder. Accordingly, the BS can expect an SIR gain due to the interference removal and make wise choices.

For example, the UE can primarily predict an MAI by the best companion precoder of the UE and inform the BS whether the UE connects through the MU-MIMO or the SU-MIMO. At this time, it shows a better capability in comparison with a simple report of the best companion precoder. The UE may report that a companion precoder is suitable for being simultaneously connected or a companion precoder is not suitable for being simultaneously connected.

The UE can secondarily report better companion precoders for supporting a further improved UE selection diversity. At this time, the UE can simultaneously report the best companion precoders, or periodically report with two or more feedback cycles or aperiodically report in order to reduce a feedback overhead as described with reference to tables 8 and 9.

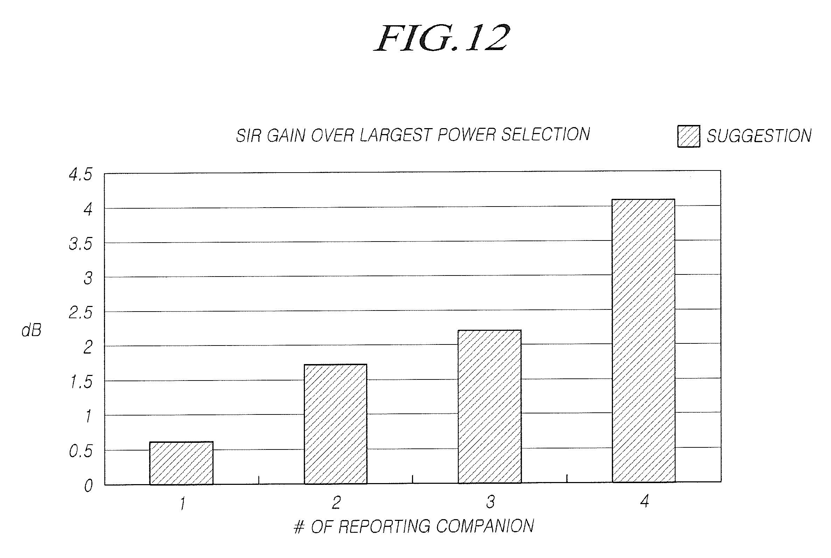

FIG. 12 is a view illustrating an SIR gain according to the reported best companion precoders.

Referring to FIG. 12, an SIR gain according to a best companion precoder for a 4×4 antenna is measured based on an assumption that there is no correlation between a transmitting antenna and a receiving antenna and LTE precoders. Although much feedback overhead is required, a noticeable capability gain is achieved when the reported best companion precoders are considered.

Even if it was described above that all of the components of an embodiment of the present invention are coupled as a single unit or coupled to be operated as a single unit, the present invention is not necessarily limited to such an embodiment. That is, among the components, one or more components may be selectively coupled to be operated as one or more units. In addition, although each of the components may be implemented as an independent hardware, some or all of the components may be selectively combined with each other, so that they can be implemented as a computer program having one or more program modules for executing some or all of the functions combined in one or more hardwares. Codes and code segments forming the computer program can be easily conceived by an ordinarily skilled person in the technical field of the present invention. Such a computer program may implement the embodiments of the present invention by being stored in a computer readable storage medium, and being read and executed by a computer. A magnetic recording medium, an optical recording medium, a carrier wave medium, or the like may be employed as the storage medium.

Although a preferred embodiment of the present invention has been described for illustrative purposes, those skilled in the art will appreciate that various modifications, additions and substitutions are possible, without departing from the scope and spirit of the invention as disclosed in the accompanying claims. Therefore, the embodiments disclosed in the present invention are intended to illustrate the scope of the technical idea of the present invention, and the scope of the present invention is not limited by the embodiment. The scope of the present invention shall be construed on the basis of the accompanying claims in such a manner that all of the technical ideas included within the scope equivalent to the claims belong to the present invention.

### CROSS-REFERENCE TO RELATED APPLICATION

This application claims priority from and the benefit under 35 U.S.C §120 of U.S Patent Application No. 61/220,353 filed on June 25, 2009 and 35 U.S.C. §119(a) of Korean Patent Application No. 10-2010-0002603 filed on January 12, 2010, which are hereby incorporated by reference for all purposes as if fully set forth herein.

## Claims

1. A method of selecting a precoder of a UE (User Equipment) by a BS (Base Station) in a Mutiple User-Multiple Input Multiple Output (MU-MIMO) antenna system, the method comprising:
receiving information extracted by using channel state information from a UE; and
determining a precoder causing the least interference between different UEs including the UE with reference to the received information extracted by using the channel state information during a determined time.

2. The method as claimed in claim 1, wherein determining of the precoder corresponds to selecting precoders for two or more UEs by using a first-order prediction scheme or a second-order or a higher-order prediction scheme during the determined time.

3. The method as claimed in claim 2, further comprising:
receiving, by the BS, a feedback of a Precoding Matrix Index (PMI), which is the information extracted by using the channel state information, for ensuring a reception channel capability of a downlink of each UE from two or more UEs;
storing the fed back PMI of each UE transmitted during two or more feedback cycles; and
determining a set of precoders causing the least interference between the two or more UEs with reference to the stored PMI of each UE.

4. The method as claimed in claim 3, wherein a precoder for each UE causing the least interference is determined by a first-order prediction scheme or a second-order prediction scheme after a PMI corruption relation between the two or more UEs is grasped during the two or more feedback cycles.

5. A method of selecting a UE by a BS in an MU-MIMO antenna system, the method comprising:
receiving information extracted by using channel state information from a UE; and
determining two or more UEs causing the least interference between UEs as a set of UEs to be supported, with reference to the received information extracted by using the channel state information during a determined time.

6. The method as claimed in claim 5, further comprising:
receiving, by the BS, a feedback of a Precoding Matrix Index (PMI), which is the information extracted by using the channel state information, for ensuring a reception channel capability of a downlink of each UE from two or more UEs in an MU-MIMO system;
storing the PMI of each UE fed back during two or more feedback cycles; and
determining a set of UEs to be supported by an MU-MIMO causing the least interference between UEs with reference to the stored PMI of each UE.

7. A switching method by a BS supporting a Single User-MIMO (SU-MIMO) antenna and an MU-MIMO, the switching method comprising:
receiving information for estimating a downlink channel state during two or more feedback cycles from two or more UEs;
extracting multiple access interference between UEs by using the received information;
determining a set of UEs to be supported causing the least interference between the two or more UEs;
selecting a precoder for each UE included in the set of UEs to be supported; and
performing switching between an SU-MIMO mode and an MU-MIMO mode according to a capability prediction value of the MU-MIMO mode and a capability prediction value of the SU-MIMO mode in consideration of information on the determined UEs to be supported and the selected precoder,
wherein the information for estimating the downlink channel state contains at least one of information on a Channel Quality Indicator (CQI) measured by the UE and information on a PMI selected for ensuring a reception channel capability of a downlink of the UE.

8. An apparatus for supporting an SU-MIMO antenna and an MU-MIMO, the apparatus comprising:
a receiver for receiving precoding related indication information, which is information extracted after a downlink channel measurement, from a UE;
a storing unit for storing the precoding related indication information received during two or more feedback cycles from two or more UEs; and
a precoder selector for determining precoding information for each UE causing the least interference between UEs by using the precoding related indication information stored in the storing unit.

9. The apparatus as claimed in claim 8, wherein the precoder selector grasps a first-order or a second-order PMI corruption relation between UEs from the precoding related indication information transmitted during the two or more feedback cycles, and then determines precoders for each UE causing the least interference through a first-order prediction scheme or a second-order prediction scheme.

10. The apparatus as claimed in claim 8, further comprising:
a receiver for receiving Channel State Indicator (CQI) information according to the downlink channel measurement from the two or more UEs; and
a UE selector for selecting a set of UEs to be supported by an MU-MIMO causing the least interference between UEs by using the CQI information and the precoding related indication information stored in the storing unit.

11. The apparatus as claimed in claim 10, wherein the UE selector grasps a first-order or a second-order PMI corruption relation between UEs from the precoding related indication information transmitted during the two or more feedback cycles, and then determines a set of UEs to be supported causing the least interference through a first-order prediction scheme or a second-order prediction scheme.

12. An apparatus for supporting an SU-MIMO antenna and an MU-MIMO, the apparatus comprising:
a receiver for receiving precoding matrix index information, which is information extracted by using channel state information, from two or more UEs in an MU-MIMO mode;
an MU-MIMO supporting unit for determining UEs to be supported causing the least interference between the two or more UEs by using the precoding matrix index information from the two or more UEs transmitted during two or more feedback cycles, predicting a capability in an MU-MIMO through precoders for each UE of the determined UEs to be supported, and transferring the predicted capability to a switching unit;
an SU-MIMO supporting unit for determining a precoder of a UE, which is to be supported, from information (PMI) extracted by using channel state information from a UE in an SU-MIMO mode, predicting a capability in the SU-MIMO mode, and transferring the predicted capability to the switching unit; and
the switching unit for performing switching between SU-MIMO and MU-MIMO modes based on information transferred from the MU-MIMO supporting unit and the SU-MIMO supporting unit.

13. A method of feeding back channel information of a UE in an MU-MIMO antenna system, the feedback method comprising:
receiving reference signals from a long term BS;
estimating a downlink reception channel by using the received reference signals;
selecting a precoding matrix suitable for the estimated channel;
feeding back a precoding matrix index for the precoding matrix to the BS; and
feeding back a plurality of companion precoding matrix information causing less interference when the BS uses the precoding matrix in order to select a UE to be supported by an MU-MIMO.

14. The method as claimed in claim 13, wherein, in feeding back of the plurality of companion precoding matrix information, the plurality of companion precoding matrix information are fed back to the BS during two or more feedback cycles.

15. The feedback method as claimed in claim 14, wherein, in feeding back of the plurality of companion precoding matrix information, the plurality of companion precoding matrix information are periodically or aperiodically fed back to the BS during the two or more feedback cycles.

16. The feedback method as claimed in claim 13, wherein the reference signals correspond to CSI-RSs (Channel State Information-Reference Signals) transmitted by a BS to estimate a downlink channel.

17. The feedback method as claimed in claim 14, wherein, in selecting of the precoding matrix, two or more precoding matrices are selected, and, in feeding back of the precoding matrix index, two or more precoding matrix indexes for the two or more precoding matrices are fed back to the BS during two or more feedback cycles.

18. The feedback method as claimed in claim 17, wherein the two or more feedback cycles in feeding back of the precoding matrix index and the two or more feedback cycles in feeding back of the plurality of companion precoding matrix information are identical to each other.

19. A method of receiving a channel by a BS in an MU-MIMO antenna system, the method comprising:
receiving a feedback of a precoding matrix index for a precoding matrix suitable for a long term downlink reception channel from one or more UEs; and
receiving a feedback of a plurality of companion precoding matrix information causing less interference when the BS uses the precoding matrix from the one or more UEs such that the BS selects a UE to be supported by an MU-MIMO.

20. The method as claimed in claim 19, wherein, in receiving the feedback of the plurality of companion precoding matrix information, the plurality of companion precoding matrix information is fed back from the one or more UEs during two or more feedback cycles.

21. The method as claimed in claim 19, wherein, in receiving the feedback of the plurality of companion precoding matrix information, the plurality of companion precoding matrix information are periodically or aperiodically fed back from the one or more UEs during two or more feedback cycles.

22. The method as claimed in claim 19, wherein the reference signals correspond to CSI-RSs (Channel State Information-Reference Signals) transmitted by a BS to estimate a downlink channel.

23. The method as claimed in claim 21, wherein, in receiving of the feedback of the precoding matrix index, two or more precoding matrix indexes for two or more precoding matrices are fed back to the BS during two or more feedback cycles.

24. The method as claimed in claim 23, wherein the two or more feedback cycles in receiving the feedback of the plurality of companion precoding matrix information and the two or more feedback cycles in receiving the feedback of the plurality of companion precoding matrix information are identical to each other.

25. A terminal in an MU-MIMO antenna system, comprising:
a reference signal receiving means for receiving reference signals from a long term BS;
a channel information searching means for estimating a downlink reception channel by using the received reference signals, selecting a precoding matrix suitable for the estimated channel, feeding back a precoding matrix index for the precoding matrix to the BS, and feeding back a plurality of companion precoding matrix information causing less interference such that the BS selects a UE to be supported by an MU-MIMO when the BS uses the precoding matrix.

26. The terminal as claimed in claim 25, wherein the channel information searching means feeds back the plurality of companion precoding matrix information to the BS during two or more feedback cycles.

27. The terminal as claimed in claim 26, wherein the channel information searching means periodically or aperiodically feeds back the plurality of companion precoding matrix information to the BS during the two or more feedback cycles.

28. The terminal as claimed in claim 25, wherein the reference signals correspond to CSI-RSs (Channel State Information-Reference Signals) transmitted by a BS to estimate a downlink channel.

29. The terminal as claimed in claim 26, wherein the channel information searching means selects two or more precoding matrices and feeds back two or more precoding matrix indexes for the two or more precoding matrices to the BS during the two or more feedback cycles.

30. The terminal as claimed in claim 29, wherein the two or more feedback cycles during which the precoding matrix indexes are fed back and the two or more feedback cycles during which the companion precoding matrix information is fed back are identical to each other.
